(19) Europäisches Patentamt
European Patent Office
Office européen des brevets

(11) Veröffentlichungsnummer: **0 008 098**
**B1**

# (12) EUROPÄISCHE PATENTSCHRIFT

(45) Veröffentlichungstag der Patentschrift: **26.08.81**

(51) Int. Cl.³: **C 07 F 9/165**, C 07 F 9/24, A 01 N 57/10, A 01 N 57/26

(21) Anmeldenummer: **79102807.9**

(22) Anmeldetag: **04.08.79**

(54) **1-Phenyl-3,3-dichlor-2-propenyl-(di)(thio)-phosphorsäure-ester, Verfahren zu ihrer Herstellung und ihre Verwendung als Schädlingsbekämpfungsmittel.**

(30) Priorität: **07.08.78 DE 2834505**

(43) Veröffentlichungstag der Anmeldung: **20.02.80 Patentblatt 80/4**

(45) Bekanntmachung des Hinweises auf die Patenterteilung: **26.08.81 Patentblatt 81/34**

(84) Benannte Vertragsstaaten: **AT BE CH DE FR GB IT LU NL SE**

(56) Entgegenhaltungen:
**FR-A-2 014 986**
**FR-A-2 190 831**
**FR-A-2 200 278**

**DERWENT JAPANESE PATENTS REPORT, Vol. U, Nr. 52, 29. Januar 1974 Section C, p. 4 & JP-B-73 43619 (KUMIAI CHEMICAL IND.)**

(73) Patentinhaber: **BASF Aktiengesellschaft, Carl-Bosch-Strasse 38, D-6700 Ludwigshafen (DE)**

(72) Erfinder: **Baumann, Annegrit, Dr. Dipl.-Chem., Im Sennteich 26, D-6800 Mannheim 24 (DE)**
Erfinder: **Adolphi, Heinrich, Dr. Dipl.-Biol., Kalmitweg 11, D-6703 Limburgerhof (DE)**

**EP 0 008 098 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

# 1-Phenyl-3,3-dichlor-2-propenyl-(di)(thio)-phosphorsäureester, Verfahren zu ihrer Herstellung und ihre Verwendung als Schädlingsbekämpfungsmittel

Die vorliegende Erfindung betrifft neue 1-Phenyl-3,3-dichlor-2-propenyl-(di)(thio)-phosphorsäureester, ein Verfahren zu ihrer Herstellung und Schädlingsbekämpfungsmittel, die diese Phosphorsäurederivate als Wirkstoffe enthalten.

Insektizid wirksame O,O-Dialkyl- bzw. O-Alkyl-S-alkyl-S-alkenyl-phosphordithioate sind Gegenstand der DE-OS 1937439. Im einzelnen werden jedoch lediglich Dithiophosphate mit substituierten Allylresten als biologisch wirksam beschrieben.

Weiterhin sind O,O-Dialkyl-S-(3,3-dichlor-propen-2-yl)-thiophosphate, die in 1-Stellung des Propenylrestes Halogenalkylgruppen, beispielsweise eine 2-Chlorethylgruppe, tragen, als insektizid und akarizid wirksam bekannt (JP-OS 7343619).

Es wurde gefunden, dass die neuen 1-Phenyl-3,3-dichlor-2-propenyl-(di)(thio)-phosphorsäureester der Formel I

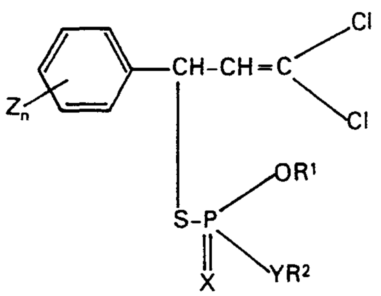

I

in der

$R^1$ für Methyl oder Äthyl,
$R^2$ für unverzweigtes oder verzweigtes Alkyl mit bis zu 5 Kohlenstoffatomen,
X für Sauerstoff oder Schwefel,
Y für Sauerstoff, Schwefel oder $-N(CH_3)-$,
Z für Halogen oder unverzweigtes oder verzweigtes Alkyl oder Alkoxy mit bis zu 4 Kohlenstoffatomen und
n für 0, 1 oder 2 steht,

sich hervorragend zur Bekämpfung von Schädlingen und lästigen Gliedertieren eignen.

In der Formel I steht $R^1$ für Methyl oder Äthyl, vorzugsweise für Äthyl, $R^2$ für unverzweigtes oder verzweigtes Alkyl mit bis zu 5 Kohlenstoffatomen, vorzugsweise für Propyl- oder Butylreste, insbesondere für n-Propyl, i-Butyl. X und Y stehen für Sauerstoff oder Schwefel, wobei bevorzugte Verbindungen solche sind, bei denen X Sauerstoff und Y Schwefel bedeuten. Y kann ausserdem für den Rest $-N(CH_3)-$ stehen. Der Phenylring kann einfach oder mehrfach durch Halogen oder unverzweigte oder verzweigte Alkyl- oder Alkoxyreste mit bis zu 4 Kohlenstoffatomen, vorzugsweise in 3- und/oder 4-Stellung, substituiert sein. Bevorzugte Substituenten sind Chlor, Brom, Methyl, Methoxy.

Gegenstand der Erfindung ist weiterhin ein Verfahren zur Herstellung der neuen 1-Phenyl-3,3-dichlor-2-propenyl-(di)(thio)-phosphorsäureester der Formel I, das dadurch gekennzeichnet ist, dass man 1,1,3-Trichlor-3-phenyl-1-propene der Formel II

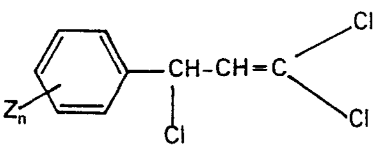

II

in der Z und n die oben genannten Bedeutungen haben, mit Salzen der Formel III

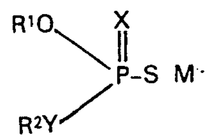

III

in der $R^1$, $R^2$, X und Y die oben genannten Bedeutungen haben und $M^{\oplus}$ für ein gegebenenfalls substituiertes Ammonium- oder ein Alkalimetallion steht, in Gegenwart eines inerten Lösungs- oder Verdünnungsmittels umsetzt.

Geeignete Lösungs- oder Verdünnungsmittel sind beispielsweise aromatische Kohlenwasserstoffe, wie Benzol, Toluol, Xylole, Chlorbenzol, Nitrobenzol; chlorierte oder nitrierte aliphatische Kohlenwasserstoffe, wie Dichlormethan, Chloroform, Tetrachlorkohlenstoff, 1,2-Dichloräthan, Nitromethan; aliphatische Nitrile, wie Acetonitril, Propionitril; acyclische und cyclische Äther, wie Diäthyläther, Diisopropyläther, Diglykoldimethyläther, Tetrahydrofuran, Dioxan; acyclische und cyclische Ketone, wie Aceton, Methyläthylketon, Diäthylketon, Methylpropylketon, Cyclohexanon; Dimethylformamid; Wasser.

Die Reaktionstemperatur kann innerhalb eines grösseren Bereichs variiert werden. Im allgemeinen arbeitet man zwischen 0 und 100 °C, vorzugsweise zwischen 40 und 60 °C, soweit nicht der Siedepunkt des Lösungsmittels die Temperatur nach oben begrenzt.

Die als Ausgangsstoffe verwendeten 1,1,3-Trichlor-3-phenyl-1-propene der Formel II sind im Prinzip bekannt und können nach bekannten Verfahren (Houben-Weyl, Methoden der org. Chemie, Bd. 7/2a, S. 427 ff, Georg Thieme-Verlag, Stuttgart, 1973; Olah, George A., Friedel Crafts and Related Reactions, Bd. III, S. 1033 ff, Interscience Publishers, 1963; DE-OS 2536503) nach folgendem Reaktionsschema hergestellt werden:

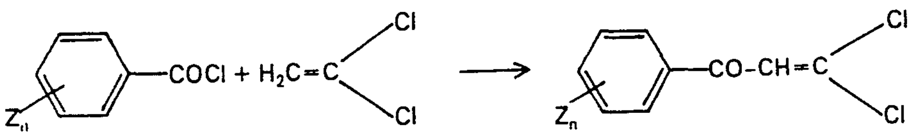

IV

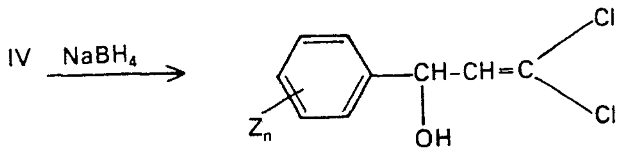


V

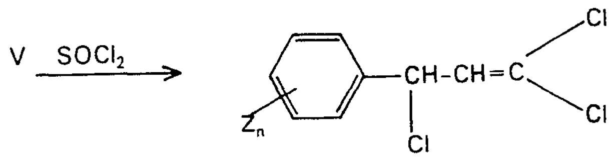


VI

Die Salze der Formel III sind ebenfalls bekannte Verbindungen, die nach bekannten Herstellungsverfahren erhalten werden (Houben-Weyl, Methoden der org. Chemie, Bd. 12/2, S. 690, Georg Thieme-Verlag, Stuttgart, 1964). Als Kationen dieser Salze kommen ausser dem Ammoniumion substituierte Ammoniumionen, beispielsweise Dimethylammonium, Diäthylammonium, oder ein Alkalimetallion, beispielweise Natrium oder Kalium, in Betracht.

Man setzt die Ausgangsstoffe zweckmässigerweise in äquimolaren Mengen ein. Ein Überschuss der einen oder anderen Reaktionskomponente stört nicht.

Die neuen Phosphorsäurederivate der Formel I fallen in Form von Ölen an. In ihrer Charakterisierung dienen die Elementaranalyse, der Berechnungsindex sowie IR- und NMR-spektroskopische Daten.

Die folgenden Beispiele erläutern die Herstellung der neuen Verbindungen.

Beispiel 1

0,036 Mol 1,1,3-Trichlor-3-(3-chlorphenyl)-propen-1 werden in 100 ml Acetonitril gelöst und tropfenweise mit 0,036 Mol O-Äthyl-S-sec.-butyl-phosphorsaurem Dimethylammoniumsalz, gelöst in 100 ml Acetonitril, versetzt. Nach zwei Stunden wird auf 40 bis 50 °C erhitzt. Nach zweistündigem Rühren wird eingeengt, mit Diäthyläther aufgenommen, mit Wasser ausgewaschen, getrocknet und eingeengt.

Man erhält 11,4 g O-Äthyl-S-sec.-butyl-S-[3,3-dichlor-1-(3-chlorphenyl)]-2-propenyl-phosphordithioat, entsprechend einer Ausbeute von 73% d.Th.; $n_D^{25}$ = 1,5686.

Analyse:

| | | | | | |
|---|---|---|---|---|---|
| theor. | C 41,5 | H 4,7 | S 14,78 | Cl 24,5 | P 7,1 |
| gef. | C 42,3 | H 4,7 | S 13,9 | Cl 24,8 | P 6,5 |

Beispiel 2

Analog Beispiel 1 werden 0,1 Mol 1,1,3-Trichlor-3-phenyl-1-propen und 0,1 Mol O-Äthyl-S-i-butyl-phosphorsaures Dimethylammoniumsalz umgesetzt. Man erhält 30,8 g O-Äthyl-S-i-butyl-S-(3,3-dichlor-1-phenyl)-2-propenyl-phosphordithioat, entsprechend einer Ausbeute von 77% d.Th.; $n_D^{25}$ = 1,5630.

Analyse:

| | | | | | |
|---|---|---|---|---|---|
| theor. | C 45,2 | H 5,3 | S 16,1 | Cl 17,8 | P 7,8 |
| gef. | C 45,8 | H 5,6 | S 15,7 | Cl 18,4 | P 7,2 |

Beispiel 3

Analog Beispiel 1 werden 0,05 Mol 1,1,3-Trichlor-3-(3-methoxyphenyl)-1-propen in 100 ml Tetrahydrofuran mit 0,055 Mol O-Äthyl-S-sec.-butyl-phosphorsaurem Dimethylammoniumsalz in 100 ml Tetrahydrofuran umgesetzt. Man erhält 16,3 g O-Äthyl-S-sec.-butyl-S-[3,3-dichlor-1-(3-methoxyphenyl)] -2-propenyl-phosphordithioat, entsprechend einer Ausbeute von 76% d.Th.; $n_D^{25}$ = 1,5668.

Analyse:

| | | | | | |
|---|---|---|---|---|---|
| theor. | C 44,8 | H 5,4 | S 14,9 | Cl 16,5 | P 7,2 |
| gef. | C 45,0 | H 5,6 | S 15,2 | Cl 17,0 | P 6,9 |

Analog können folgende Verbindungen synthetisiert werden:

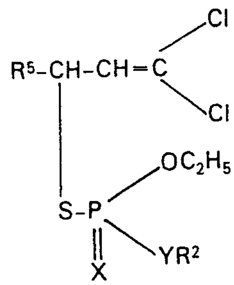

| Nr. | $R^5$ | $R^2$ | X | Y | $n_D^{25}$ |
|---|---|---|---|---|---|
| 4 | 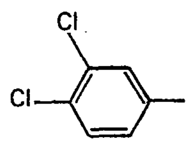 | $C_2H_5$ | S | O | 1,5898 |
| 5 | 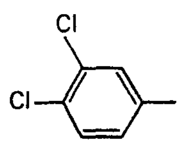 | $n\text{-}C_3H_7$ | O | S | 1,5869 |
| 6 | 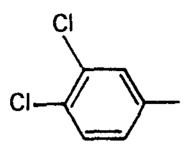 | $i\text{-}C_3H_7$ | O | S | |
| 7 | 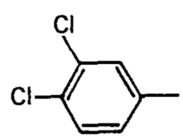 | $CH_3$ | O | $-N(CH_3)-$ | 1,5662 |
| 8 | 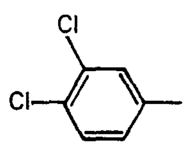 | sec-$C_4H_9$ | O | S | 1,5752 |
| 9 | 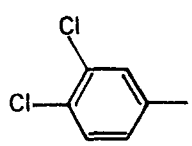 | $i\text{-}C_4H_9$ | O | S | 1,5762 |
| 10 | 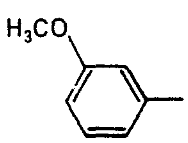 | $i\text{-}C_4H_9$ | O | S | 1,5648 |
| 11 | 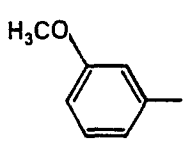 | $n\text{-}C_3H_7$ | O | S | 1,5682 |

| Nr. | $R^5$ | $R^2$ | X | Y | $n_D^{25}$ |
|---|---|---|---|---|---|
| 12 | 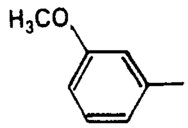 | $C_2H_5$ | S | O | ./. |
| 13 | 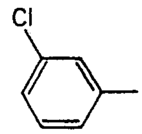 | $n-C_3H_7$ | O | S | 1,5711 |
| 14 | 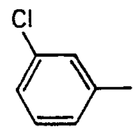 | $C_2H_5$ | S | O | 1,5790 |
| 15 | 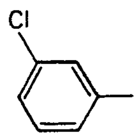 | $i-C_4H_9$ | O | S | 1,5660 |
| 16 | 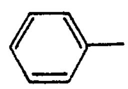 | $n-C_3H_7$ | O | S | 1,5690 |
| 17 | 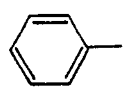 | sec-$C_4H_9$ | O | S | 1,5630 |
| 18 | 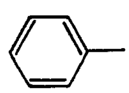 | $C_2H_5$ | S | O | 1,5760 |
| 19 | 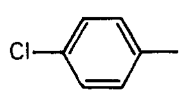 | sec-$C_4H_9$ | O | S | 1,5710 |
| 20 | 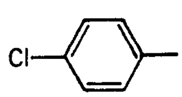 | $i-C_4H_9$ | O | S | 1,5738 |
| 21 | 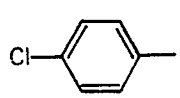 | $n-C_3H_7$ | O | S | 1,5843 |
| 22 | 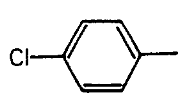 | $i-C_5H_{11}$ | O | S | 1,5690 |

| Nr. | $R^5$ | $R^2$ | X | Y | $n_D^{25}$ |
|---|---|---|---|---|---|
| 23 | 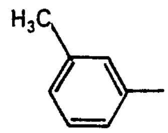 | sec-$C_4H_9$ | O | S | 1,5660 |
| 24 | 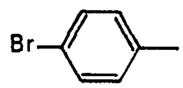 | sec-$C_4H_9$ | O | S | |
| 25 | 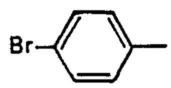 | i-$C_4H_9$ | O | S | |
| 26 | 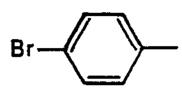 | n-$C_3H_7$ | O | S | |
| 27 | 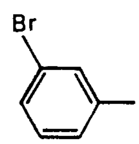 | sec-$C_4H_9$ | O | S | |
| 28 | 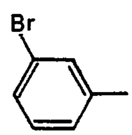 | i-$C_4H_9$ | O | S | |
| 29 | 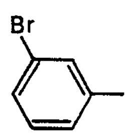 | n-$C_3H_7$ | O | S | |
| 30 | 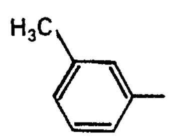 | i-$C_4H_9$ | O | S | |
| 31 | 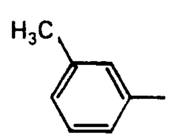 | n-$C_3H_7$ | O | S | |

Die erfindungsgemässen Verbindungen sind geeignet, um schädliche und lästige Gliedertiere aus der Klasse der Insekten und Arachnoidea wirksam zu bekämpfen.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Trotrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler). Ephestia kuehniella (Mehlmotte), Chilo suppressalis (Reisstengelbohrer), Galleria mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Grosser Frostspanner), Bupalus piniarius (Kiefernspanner), Hyphantria cunea (Weisser Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweissling), Aporia crataegi (Baumweissling);

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agricotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varicestris (Mexikanischer Bohnenkäfer), Phyllopertha horticola (Junikäfer), Popilla japonica (Japankäfer), Melolontha melolontha (Feldmaikäfer), Melolontha hippocastani (Wansmaikäfer), Amphimallus solstitialis (Brachkäfer), Crioceris asparagi (Spargelhähnchen), Lema melanopus (Getreidehähnchen), Lepinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüssler), Otiorrhynchus ovatus (Erdbeerwurzelrüssler), Hylobies abietis (Grosser Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüssler), Ceuthorrhynchus napi (Grosser Kohltriebrüssler), Sitophilus granaria (Kornkäfer), Anisandrus dispar (Ungleicher Holzborkenkäfer), Ips typographus (Buchdrucker), Blastophagus piniperda (Gefurchter Wandgärtner);

aus der Ordnung der Zweiflügler (Diptera) beispielsweise Mayetiola destructor (Hessenfliege), Dasyneura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeer-Fruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege);

aus der Ordnung der Hautflügler (Hymenoptera) beispielsweise Athalia rosae (Rübsenblattwespe), Hoplocampa minuta (Pflaumensägewespe), Monomorium pharaonis (Pharaoameise), Solenopsis geminata (Feuerameise), Atta sexdens (Blattschneiderameise);

aus der Ordnung der Wanzen (Heteroptera) beispielsweise Nezara viridula (Grüne Reiswanze), Eurygaster integriceps (Asiatische Getreidewanze), Blissus leucopterus (Chinch bug.), Dysdercus cingulatus (Kapok-Wanze), Piesma quadrata (Rübenwanze), Lygus pratensis (Gemeine Wiesenwanze);

aus der Ordnung der Pflanzensauger (Homoptera) beispielsweise Perkinsiella saccharicida (Zukkerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weisse Fliege), Aphis fabae (Schwarze Bohnenlaus), Aphis pomi (Grüne Apfellaus), Aphis sambuci (Holunderblattlaus), Aphidula nasturtii (Kreuzdornblattlaus), Cerosipha gossypii (Gurkenblattlaus), Sappaphis mali (Rosige Apfellaus), Sappaphis mala (Mehlige Birnblattlaus), Dysaphis radicola (Mehlige Apfelfalterlaus), Brachycaudus cardui (Grosse Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschlaus), Dysaulacorthum pseuodosolani (Gefleckte Kartoffellaus), Acyrthosiphon onobrychis (Grüne Erbsenlaus), Macrosiphon rosae (Grosse Rosenblattlaus), Megoura viciae (Wickenlaus), Schizoneura lanuginosa (Birnenblutlaus), Eriosoma lanigerum (Blutlaus), Pemphigus bursarius (Salatwurzellaus), Dreyfusia nordmannianae (Tannentrieblaus), Dreyfusia piceae (Weisstannenstammlaus), Adelgas laricis (Rote Richtengallenlaus), Viteus

vitifolii (Reblaus);

aus der Ordnung der Termiten (Isoptera) beispielsweise Reticulitermes lucifugus.

Zur Klasse der Arachnoidea gehören Milben und Zecken (Acarina), beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Die erfindungsgemässen Verbindungen können mit Erfolg im Pflanzenschutz sowie auf dem Hygiene-, Vorratsschutz- und Veterinärsektor als Schädlingsbekämpfungsmittel umgesetzt werden.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen angewendet werden. Die Anwendungsformen richten sich ganz nach den Verwendungszwecken; sie sollten in jedem Fall möglichst die feinste Verteilung der erfindungsgemässen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser in Betracht.

Wässrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylenoctylphenoläther, äthoxyliertes Isooctylphenol, Octylphenol, Nonylphenon, Alkylphenolpolyglykoläther, Tributylphenylpolyglykoläther, Alkylarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löss, Ton, Dolomit, Diatomeenerde, Kalzium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,1 und 95 Gewichtsprozent Wirkstoff, vorzugsweise zwischen 0,5 und 90 Gewichtsprozent.

Die Wirkstoffkonzentrationen in den anwendungsfertigen Zubereitungen können in grösseren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, dabei ist es möglich, Formulierungen mit über 95 Gew.% Wirkstoff oder sogar den 100-prozentigen Wirkstoff auszubringen.

Beispiele für Formulierungen sind:

I. 3 Gewichtsteile O-Äthyl-S-sec.-butyl-S-[3,3-dichlor-1-(3-chlorphenyl)]-2-propenyl-phosphordithioat werden mit 97 Gewichtsteilen feinteiligem Kaolin innig vermischt. Man erhält auf diese Weise ein Stäubemittel, das 3 Gew.% des Wirkstoffs enthält.

II. 20 Teile O-Äthyl-S-isopropyl-S-(3,3-dichlor-1-phenyl)-2-propenyl-phosphordithioat werden mit 2 Teilen Calciumsalz der Dodecylbenzolsulfonsäure, 8 Teile Fettalkohol-polyglykoläther, 2 Teile Natriumsalz eines Phenolsulfonsäure-harnstoffformaldehyd-kondensats und 68 Teile eines paraffinischen Mineralöls innig vermischt. Man erhält eine stabile ölige Dispersion.

III. 20 Gewichtsteile O-Äthyl-S-sec.-butyl-S-[3,3-dichlor-1-(3-methoyphenyl)]-2-propenyl-phosphordithioat werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-mono-äthanolamid, 5 Gewichtsteilen Calciumsalz der Dodecylbenzolsulfonsäure und 5 Gewichtsteilen des Anlagerungsproduktes von 40 Mol Äthylenoxid an 1 Mol Ricinusöl besteht. Durch Ausgiessen und feines Verteilen der Lösung in 100000 Gewichtsteilen Wasser erhält man eine wässrige Dispersion, die 0,02 Gew.% des Wirkstoffs enthält.

IV. 20 Gewichtsteile O-Äthyl-S-n-propyl-S- (3,3-dichlor-1- (3,4-dichlorphenyl) -propen-2-yl-phosphordithioat werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10 Gewichtsteilen des Anlagerungsproduktes von 40 Mol Äthylenoxid an 1 Mol Ricinusöl besteht. Durch Eingiessen und feines Verteilen der Lösung in 100000 Gewichtsteilen Wasser erhält man eine wässrige Dispersion, die 0,02 Gew.% des Wirkstoffs enthält.

Zu den Mischungen oder Einzelwirkstoffen können Öle verschiedenen Typs, Herbizide, Fungizide, andere Insektizide, Bakterizide, gegebenenfalls auch erst unmittelbar vor der Anwendung (Tankmix), zugesetzt werden. Diese Mittel können zu den erfindungsgemässen Mitteln im Gewichtsverhältnis 1:10 bis 10:1 zugemischt werden.

Beispielsweise können folgende Mittel zugemischt werden:
1,2-Dibrom-3-chlorpropan, 1,3-Dichlorpropen, 1,3-Dichlorpropen + 1,2-Dichlorpropan, 1,2-Dibrom-äthan, 2-sec.-Butylphenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercaptophenyl-N-methylcarbamat, 4-Dimethylamino-3,5-xylyl-N-methylcarbamat, 2-(1,3-Dioxolan-2-yl)-phenyl-N-methylcarbamat, 1-Naphthal-N-methylcarbamat, 2,3-Dihydro-2,2-dimethyl-benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)oxy]-thio-acetimidat, Methyl-N′,N′-dimethyl-N-[(methylcarbamoyl)oxy]-1-thiooxamidat, N-(2-Methyl-4-chlorphenyl)-N′,N′-dimethylformamidin, Tetrachlorthiophen, O,O-Dimethyl-O-(p-nitrophenyl)-phosphorthioat, O,O-Diäthyl-O-(p-nitrophenyl)-phosphorthioat, O-Äthyl-O-(p-nitrophenyl)-phenyl-phosphonothioat, O,O-Dimethyl-O-(3-methyl-4-nitrophenyl)-phosphorthioat, O,O-Diäthyl-O-(2,4-dichlorphenyl)-phosphorthioat, O-Äthyl-O-(2,4-dichlorphenyl)-phenyl-phosphonothioat, O,O-Dimethyl-O-(2,4,5-trichlorphenyl)-phosphorthioat, O-Äthyl-O-(2,4,5-trichlorphenyl)-äthyl-phosphonothioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Äthyl-O-(3-methyl-4-methylthiophenyl)-isopropyl-phosphoramidat, O,O-Diäthyl-O-[p-(methylsulfinyl)-phenyl]-phosphorthioat, O-Äthyl-S-phenyl-äthyl-phosphordithioat, O,O-Diäthyl-[2-chlor-1-(2,4-dichlorphenyl)-vinyl]-phosphat, O,O-Dimethyl-[-2-chlor-1-(2,4,5-trichlorphenyl)]-vinyl-phosphat, O,O-Dimethyl-S-(1-phenyl)-äthylacetat-phosphordithioat, Bis-(dimethylamino)-fluorphosphinoxid, Octamethyl-pyrophosphoramid, O,O,O,O-Tetraäthyldithio-pyrophosphat, S-Chlormethyl-O,O-diäthyl-phosphordithioat, O-Äthyl-S,S-dipropyl-phosphordithioat, O,O-Dimethyl-O-2,2-dichlorvinyl-phosphat, O,O-Dimethyl-1,2-dibrom-2,2-dichloräthyl-phosphat, O,O-Dimethyl-2,2,2-trichlor-1-hydroxy-äthylphosphonat, O,O-Dimethyl-S-[1,2-biscarbäthoxy-äthyl-(1)]-phosphordithioat, O,O-Dimethyl-O-(1-methyl-2-carbmethoxy-vinyl)-phosphat, O,O-Dimethyl-S-(N-methyl-carbamoyl-methyl)-phosphordithioat, O,O-Dimethyl-S-(N-methyl-carbamoyl-methyl)-phosphorthioat, O,O-Dimethyl-S-(N-methoxyäthyl-carbamoylmethyl)-phosphordithioat, O,O-Dimethyl-S-(N-formyl-N-methylcarbamoylmethyl-phosphordithioat, O,O-Dimethyl-O-[1-methyl-2-(methyl-carbamoyl)-vinyl]-phosphat, O,O-Dimethyl-O[(1-methyl-2-dimethylcarbamoyl)-vinyl]-phosphat, O,O-Dimethyl-O-[(1-methyl-2-chlor-2-diäthylcarbamoyl)-vinyl]-phosphat, O,O-Diäthyl-S-(äthylthio-methyl)-phosphordithioat, O,O-Diäthyl-S-[(p-Chlorphenylthio)-methyl]-phosphordithioat, O,O-Dimethyl-S-(2-äthylthioäthyl)-phosphorthioat, O,O-Dimethyl-S-(2-äthylthioäthyl)-phosphordithioat, O,O-Dimethyl-S-2-äthylsulphinyl-äthyl)-phosphorthioat, O,O-Diäthyl-S-(2-äthylthio-äthyl)-phosphordithioat, O,O-Dimethyl-S-(2-äthylsulphinyl-äthyl)-phosphorthioat, O,O-Diäthylthiophosphoryliminophenyl-acetonitril, O,O-Diäthyl-S-(2-chlor-1-phthalimidoäthyl)-phosphordithioat, O,O-Diäthyl-S-[6-chlorbenzoxazolon-(2)-yl(3)]-methyldithiophosphat, O,O-Dimethyl-S-[2-methoxy-1,3,4-thiodiazol-5-onyl(4)-methyl]-phosphordithioat, O,O-Diäthyl-O-[3,5,6-trichlor-pyridyl-(2)]-phosphorthioat, O,O-Diäthyl-O-(2-pyrazinyl)-phosphorthioat, O,O-Diäthyl-O-[2-isopropyl-4-methyl-pyrimidinyl(6)]-phosphorthioat, O,O-Diäthyl-O-[2-(diäthylamino)-6-methyl-4-pyrimidinyl]-thionophosphat, O,O-Dimethyl-S-(4-oxo-1,2,3-benzotriazin-3-yl-methyl)-phosphordithioat, O,O-Dimethyl-S-[(4,6-diamino-1,3,5-triazin-2-yl)-methyl]-phosphordithioat, O,O-Diäthyl-(1-phenyl-1,2,4-triazol-3-yl)-thionophosphat, O,S-Dimethyl-phosphoramido-thioat, O,S-Dimethyl-N-acetyl-phosphoramido-thioat, γ-Hexachlorcyclohexan, 1,1-Di-(p-methoxyphenyl)-2,2,2-trichlor-äthan, 6,7,8,9,10,10-Hexachloro-1,5,5a,6,9,9a-hexahy-

dro-6,9-methano-2,4,3-benzodioxa-thiepin-3-oxid, Pyrethrine, DL-2-Allyl-3-methyl-cyclopenten-(2)-on-(1)-yl-(4)-DL-cis,trans-chrysanthemat, 5-Benzyl-furyl-(3)-methyl-DL-cis,trans-chrysanthemat, 3-Phenoxybenzyl(±)-cis,trans-2,2-dimethyl-3-(2,2-dichlorvinyl)-cyclopropancarboxylat,
α-Cyano-3-phenoxybenzyl(±)-cis,trans-2,2-dimethyl-3-(2,2-dichlorvinyl)-cyclopropancarboxylat,
(s)-α-Cyano-3-phenoxybenzyl-cis(1R,3R)-2,2-dimethyl-3-(2,2-dibromvinyl)-cyclopropancarboxylat,
3,4,5,6-Tetrahydrophthalimidoäthyl-DL-cis,trans-chrysanthemat,
2-Methyl-5-(2-propinyl)-3-furyl-chrysanthemat,
α-Cyano-3-phenoxybenzyl- -isopropyl-4-chlorphenylacetat.

Die folgenden Beispiele belegen die biologische Wirkung. Vergleichsmittel sind O,O-Dimethyl-S-(N-methylcarbamoylmethyl)-phosphordithioat (I; DE-PS 819998), O-Äthyl-S-phenyläthyl-phosphondithioat (II; US-PS 2988474), O,O-Diäthyl-S-allyl-phosphordithioat (III; DE-OS 1937439) und O-Di-äthyl-S-n-Propyl-S-allyl-phosphordithioat (IV; DE-OS 1937439).

Die Numerierung der Wirkstoffe entspricht den Herstellungsbeispielen und der tabellarischen Aufzählung.

Beispiel A

Kontaktwirkung auf Stubenfliegen (Musca domestica); Dauerkontakt

Beide Teile einer Petrischale von 10 cm Durchmesser werden mit insgesamt 2 ml der acetonischen Wirkstofflösung ausgekleidet. Nach Verdunsten des Lösungsmittels (nach ca. 30 Minuten) bringt man je 10 Fliegen in die Schalen. Die Mortalität wird nach 4 Stunden festgestellt.

| Wirkstoff Nr. | Wirkstoffmenge pro Schale [mg] | Mortalitätsrate [%] |
|---|---|---|
| 2 | 0,2 | 100 |
| 3 | 0,2 | 100 |
| 14 | 0,5 | 100 |
| | 0,2 | 80 |
| 15 | 0,2 | 100 |
| 17 | 0,5 | 100 |
| | 0,2 | 80 |
| Vergleichsmittel III | 2,0 | 100 |
| | 0,2 | unwirksam |

Beispiel B

Zuchtversuch mit Stubenfliegen (Musca domestica)

50 g eines Nährbodens aus 10 Teilen Bäckerhefe, 10 Teilen Trockenmilch, 1 Teil Agar und 100 Teilen Wasser werden in warmem Zustand mit der wässrigen Wirkstoffaufbereitung gründlich durchmischt.

Nach Erkalten belegt man den Nährboden mit ca. 0,1 ml Fliegeneiern und beobachtet über einen Zeitraum von 7 Tagen deren Entwicklung.

Die Versuchstemperatur liegt bei 22 °C.

| Wirkstoff Nr. | Konzentration der Wirkstoffaufbereitung [ppm] |
|---|---|
| 1 | 2,5 keine Entwicklung |
| 2 | 10,0 keine Entwicklung |
| 3 | 5,0 keine Entwicklung |
| 5 | 5,0 keine Entwicklung |
| | 2,5 starke Hemmung |
| 10 | 10,0 keine Entwicklung |
| 13 | 5,0 keine Entwicklung |
| 15 | 5,0 keine Entwicklung |

Beispiel C

Kontaktwirkung auf Moskito-Larven (Aedes aegypti)

200 ml Leitungswasser werden mit der Wirkstoffaufbereitung versetzt und darauf mit 30 bis 40 Moskito-Larven im 4. Larvenstadium besetzt.

Die Versuchstemperatur beträgt 22 °C. Nach 24 Stunden wird die Wirkung ermittelt.

| Wirkstoff Nr. | Wirkstoffkonzentration des Wassers [ppm] | Mortalitätsrate [%] |
|---|---|---|
| 1 | 0,05 | 100 |
| | 0,02 | ca. 80 |
| 3 | 0,2 | 100 |
| 5 | 0,1 | 100 |
| | 0,04 | ca. 80 |
| 13 | 0,2 | 100 |
| | 0,1 | ca. 80 |
| 15 | 0,1 | 100 |
| 17 | 0,2 | 100 |
| Vergleichsmittel I | 5,0 | 100 |
| | 1,0 | ca. 20 |
| Vergleichsmittel III | 1,0 | unwirksam |
| Vergleichsmittel IV | 1,0 | unwirksam |

Beispiel D

Kontaktwirkung auf Baumwollwanzen (Dysdercus intermedius)

Petrischalen von 10 cm Durchmesser werden mit 1 ml der acetonischen Wirkstofflösung ausgekleidet.

Nach Verdunsten des Lösungsmittels besetzt man die Schalen mit je 20 Larven des vorletzten Stadiums und registriert die Wirkung nach 24 Stunden.

| Wirkstoff Nr. | Wirkstoffmenge pro Petrischale [mg] | Mortalitätsrate [%] |
|---|---|---|
| 2 | 0,2 | 100 |
| | 0,1 | 80 |
| 3 | 0,5 | 100 |
| 5 | 0,5 | 100 |
| | 0,2 | 70 |
| 14 | 0,1 | 100 |
| | 0,05 | 80 |
| 17 | 0,1 | 100 |
| Vergleichsmittel III | 1,0 | unwirksam |

Beispiel E

Frass- und Kontaktwirkung auf Raupen der Kohlschabe (Plutella maculipennis)

Blätter von jungen Kohlpflanzen werden 3 Sekunden in die wässrige Wirkstoffemulsion getaucht und nach kurzem Abtropfen auf einen angefeuchteten Filter in eine Petrischale gelegt. Das Blatt wird dann mit 10 Raupen des 4. Stadiums belegt.

Nach 48 Stunden beurteilt man die Wirkung.

| Wirkstoff Nr. | Wirkstoffkonzentration der Emulsion [Gew.%] | Mortalitätsrate [%] |
|---|---|---|
| 1 | 0,01 | 100 |
| 2 | 0,05 | 100 |
| | 0,02 | ca. 80 |
| 3 | 0,02 | 100 |
| | 0,01 | ca. 80 |
| 5 | 0,02 | 100 |
| | 0,01 | ca. 80 |
| 10 | 0,05 | 100 |
| | 0,025 | ca. 80 |
| 11 | 0,05 | 100 |
| | 0,025 | ca. 80 |
| 13 | 0,02 | 100 |
| | 0,01 | ca. 80 |
| 15 | 0,02 | 100 |
| | 0,01 | ca. 80 |
| 17 | 0,02 | 100 |
| Vergleichsmittel III | 0,1 | unwirksam |

Beispiel F

Tetranychus telarius, Rote Spinne (O.P.-resistenter Stamm)

Getopfte Buschbohnen, die das zweite Folgeblattpaar zeigen und stark mit Spinnmilben infiziert sind, werden in der Spritzkabine mit der wässrigen Wirkstoffaufbereitung tropfnass gespritzt. Die Pflanzen kommen dazu auf einen Drehteller und werden von allen Seiten mit insgesamt 50 ml Spritzbrühe besprüht. Der Sprühvorgang dauert ca. 22 Sekunden.

Die Beurteilung der Wirkung erfolgt nach 10 Tagen.

| Wirkstoff Nr. | Konzentration der Wirkstoffaufbereitung [Gew.%] | Mortalitätsrate [%] |
|---|---|---|
| 1 | 0,005 | 100 |
| 5 | 0,01 | 100 |
| 10 | 0,05 | 100 |
| | 0,025 | ca. 90 |
| 13 | 0,005 | 100 |
| 15 | 0,02 | 100 |
| | 0,01 | ca. 90 |
| Vergleichsmittel I | 0,2 | 100 |
| | 0,1 | ca. 90 |
| Vergleichsmittel II | 0,1 | ca. 30 |
| Vergleichsmittel III | 0,1 | unwirksam |
| Vergleichsmittel IV | 0,1 | unwirksam |

Beispiel G

Kontaktwirkung auf Zecken (Ornithodorus moubata)

Geprüft wird mit Zecken im 3. Larvenstadium. Dazu taucht man die Tiere, die sich in einem Papierbeutel befinden, für 3 Sekunden in die Prüfemulsion. Die Beutel werden frei aufgehängt. Nach 48 Stunden wird die Wirkung auf die Zecken beurteilt.

| Wirkstoff Nr. | Wirkstoffkonzentration der Emulsion [Gew.%] | Mortalitätsrate [%] |
|---|---|---|
| 1 | 0,004 | 100 |
| 17 | 0,002 | 100 |
| Vergleichsmittel I | 0,01 | 100 |
| | 0,005 | unwirksam (Mortalität 25%) |
| Vergleichsmittel III | 0,1 | unwirksam |
| Vergleichsmittel IV | 0,04 | 80 |
| | 0,01 | unwirksam |

Beispiel H

Wirkung auf Wurzelgallennematoden (Meloidogyne incognita) an Gurken

200 g Gartenerde, die stark mit Meloidogyne incognita infiziert ist, werden mit 30 ml der wässrigen Wirkstoffaufbereitung innig vermischt. Die Erde wird darauf in Plastiktöpfe gefüllt und mit zwei Gurkensamen belegt.

Die Versuchstemperatur unterschreitet nicht +22 °C.

Nach 6 bis 8 Wochen werden die Wurzeln auf Gallenbildung untersucht.

| Wirkstoff Nr. | Wirkstoffkonzentration der Aufbereitung [ppm] |
|---|---|
| 3 | 150 keine Gallenbildung |
| 10 | 150 keine Gallenbildung |
| 11 | 150 keine Gallenbildung |
| 15 | 75 keine Gallenbildung |
| Vergleichsmittel I | 150 starke Gallenbildung |
| Vergleichsmittel II | 150 starke Gallenbildung |

**Patentansprüche für die Vertragsstaaten: BE, CH, DE, FR, GB, IT, LU**

1. 1-Phenyl-3,3-dichlor-2-propenyl-(di)(thio)-phosphorsäureester der Formel I

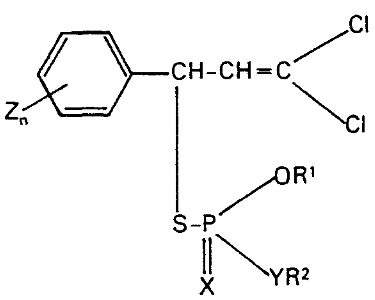

I

in der

$R^1$ für Methyl oder Äthyl,
$R^2$ für unverzweigtes oder verzweigtes Alkyl mit bis zu 5 Kohlenstoffatomen,
X für Sauerstoff oder Schwefel
Y für Sauerstoff, Schwefel oder $-N(CH_3)-$,
Z für Halogen oder unverzweigtes oder verzweigtes Alkyl oder Alkoxy mit bis zu 4 Kohlenstoffatomen und
n für 0, 1 oder 2

steht.

2. Verfahren zur Herstellung von 1-Phenyl-3,3-dichlor-2-propenyl-(di)(thio)-phosphorsäureestern der Formel I gemäss Anspruch 1, dadurch gekennzeichnet, dass man 1,1,3-Trichlor-3-phenyl-1-propene der Formel II

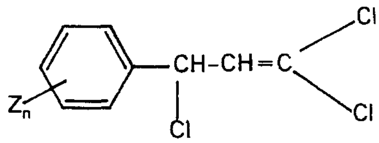

II

in der Z und n die im Anspruch 1 genannten Bedeutungen haben, mit Salzen der Formel III

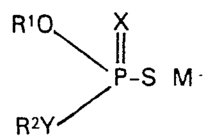

III

in der $R^1$, $R^2$, X und Y die im Anspruch 1 genannten Bedeutungen haben und $M^{\oplus}$ für ein gegebenenfalls substituiertes Ammonium- oder ein Alkalimetallion steht, bei Temperaturen im Bereich zwischen 0 und 100 °C in Gegenwart eines inerten Lösungs- oder Verdünnungsmittels umsetzt.

3. Schädlingsbekämpfungsmittel, enthaltend einen festen oder flüssigen Trägerstoff und mindestens einen 1-Phenyl-3,3-dichlor-2-propenyl-(di) (thio)-phosphorsäureester der Formel I gemäss Anspruch 1.

4. Verfahren zur Bekämpfung von Schädlingen, dadurch gekennzeichnet, dass man 1-Phenyl-3,3-dichlor-2-propenyl-(di)(thio)-phosphorsäureester der Formel I gemäss Anspruch 1 auf die Schädlinge bzw. deren Lebensraum einwirken lässt.

**Patentansprüche für den Vertragsstaat: AT**

1. Schädlingsbekämpfungsmittel, enthaltend einen 1-Phenyl-3,3-dichlor-2-propenyl-(di) (thio)-phosphorsäureester der Formel I

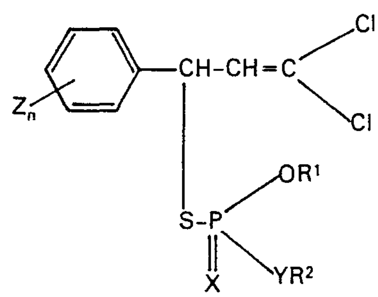

I

in der

$R^1$ für Methyl oder Äthyl,
$R^2$ für unverzweigtes oder verzweigtes Alkyl mit bis zu 5 Kohlenstoffatomen,
X für Sauerstoff oder Schwefel
Y für Sauerstoff, Schwefel oder $-N(CH_3)-$,
Z für Halogen oder unverzweigtes oder verzweigtes Alkyl oder Alkoxy mit bis zu 4 Kohlenstoffatomen und
n für 0, 1 oder 2

steht, als Wirkstoff.

2. Schädlingsbekämpfungsmittel, enthaltend inerte Zusatzstoffe und mindestens einen 1-Phenyl-3,3-dichlor-2-propenyl(di)(thio)-phosphorsäureester der Formel I gemäss Anspruch 1.

3. Verfahren zur Herstellung von 1-Phenyl-3,3-dichlor-2-propenyl-(di)(thio)-phosphorsäureestern der Formel I gemäss Anspruch 1, dadurch gekennzeichnet, dass man 1,1,3-Trichlor-3-phenyl-1-propene der Formel II

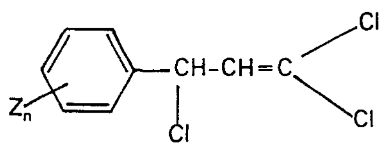
II

in der Z und n die im Anspruch 1 genannten Bedeutungen haben, mit Salzen der Formel III

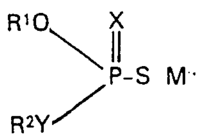
III

in der $R^1$, $R^2$, X und Y die im Anspruch 1 genannten Bedeutungen haben und $M^{\oplus}$ für ein gegebenenfalls substituiertes Ammonium- oder ein Alkalimetallion steht, bei Temperaturen im Bereich zwischen 0 und 100 °C in Gegenwart eines inerten Lösungs- und Verdünnungsmittels umsetzt.

**Claims for the contracting states: BE, CH, DE, FR, GB, IT, LU, NL, SE**

1. 1-Phenyl-3,3-dichloro-2-propenyl-(di)(thio)phosphoric acid esters of the formula I

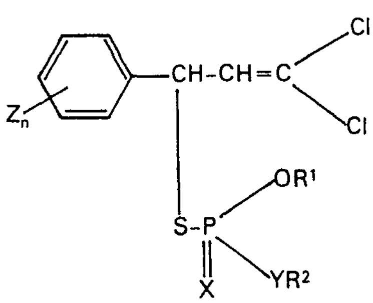
I

where

$R^1$ is methyl or ethyl,
$R^2$ is linear or branched alkyl of up to 5 carbon atoms,
X is oxygen or sulphur,
Y is oxygen, sulphur or $-N(CH_3)-$,
Z is halogen or linear or branched alkyl or alkoxy of up to 4 carbon atoms, and
n is 0, 1 or 2.

2. A process for the production of 1-phenyl-3,3-dichloro-2-propenyl-(di)(thio)phosphoric acid esters of the formula I as claimed in claim 1, characterized in that 1,1,3-trichloro-3-phenyl-1-propenes of the formula II

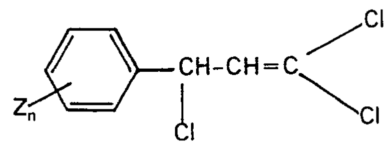
II

where Z and n have the meanings given in claim 1, are reacted with salts of the formula III

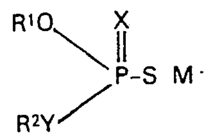
III

where $R^1$, $R^2$, X and Y have the meanings given in claim 1 and $M^{\oplus}$ stands for an optionally substituted ammonium ion or an alkali metal ion, at temperaturs of from 0 to 100 °C in the presence of an inert solvent or diluent.

3. A pesticide containing a solid or liquid carrier and at least one 1-phenyl-3,3-dichloro-2-propenyl-(di)(thio)phosphoric acid ester of the formula I as claimed in claim 1.

4. A process for controlling pests, characterized in that a 1-phenyl-3,3-dichloro-2-propenyl-(di)(thio)phosphoric acid ester of the formula I as claimed in claim 1 is allowed to act on the pests and/or their habitat.

**Claims for the contracting state: AT**

1. A pesticide containing a 1-phenyl-3,3-dichloro-2-propenyl-(di)(thio)phosphoric acid ester of the formula I

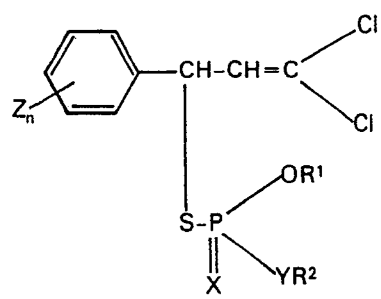
I

where

$R^1$ is methyl or ethyl,
$R^2$ is linear or branched alkyl of up to 5 carbon atoms,
X is oxygen or sulphur,
Y is oxygen, sulphur or $-N(CH_3)-$,
Z is halogen or linear or branched alkyl or alkoxy of up to 4 carbon atoms, and
n is 0, 1 or 2,

as active ingredient.

2. A pesticide containing inert additives and at least one 1-phenyl-3,3-dichloro-2-propenyl-(di)(thio)phosphoric acid ester of the formula I as claimed in claim 1.

3. A process for the production of 1-phenyl-3,3-dichloro-2-propenyl-(di)(thio)phosphoric

acid esters of the formula I as claimed in claim 1, characterized in that 1,1,3-trichloro-3-phenyl-1-propenes of the formula II

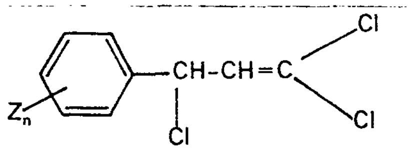

II

where Z and n have the meanings given in claim 1, are reacted with salts of the formula III

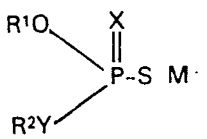

III

where $R^1$, $R^2$, X and Y have the meanings given in claim 1 and $M^{\ominus}$ stands for an optionally substituted ammonium ion or an alkali metal ion, at temperatures of from 0 to 100 °C in the presence of an inert solvent and diluent.

**Revendications pour les Etats contractants: BE, CH, DE, FR, GB, IT, LU, NL, SE**

1. Ester d'acide 1-phényl-3,3-dichloro-2-propényl-(di)(thio)-phosphorique de formule I

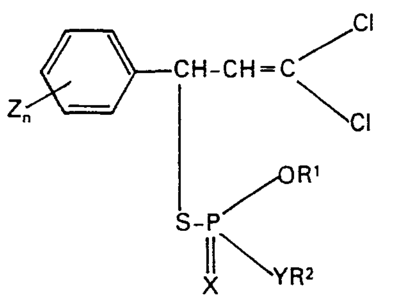

I

dans laquelle

$R^1$ représente méthyle ou éthyle
$R^2$ alkyle, ramifié ou non, ayant jusqu'à 5 atomes de carbone
X oxygène ou soufre
Y oxygène, soufre ou $-N(CH_3)-$
Z halogène ou alkyle ou alcoxy, ramifié ou non, ayant jusqu'à 4 atomes C
et
n 0, 1 ou 2.

2. Procédé de préparation d'ester d'acide 1-phényl-3,3-dichloro-2-propényl-(di)(thio)-phosphorique de formule I selon la revendication 1, caractérisé par le fait que l'on fait réagir, à des températures comprises entre 0 et 100 °C en présence d'un solvant ou diluant inerte, du 1,1,3-trichloro-3-phényl-1-propène de formule II

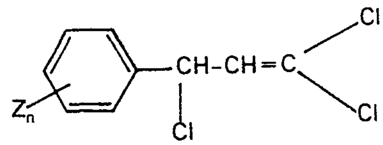

II

dans laquelle Z et n ont la signification indiquée dans la revendication 1, avec des sels de formule III

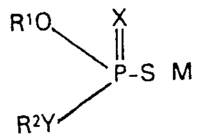

III

dans laquelle $R^1$, $R^2$, X et Y ont la signification indiquée à la revendication 1 et $M^{\ominus}$ est un ion ammonium ou métal alcalin éventuellement substitué.

3. Produit antiparasitaire, contenant un support solide ou liquide et au moins un ester d'acide 1 - phényl - 3,3 - dichloro - 2 - propényl - (di) (thio) - phosphorique de formule I selon la revendication 1.

4. Procédé de lutte contre les parasites, caractérisé par le fait que l'on fait agir l'ester d'acide 1-phényl-3,3-dichloro-2-propényl-(di)(thio)-phosphorique de formule I selon la revendication 1 sur des parasites ou leur biotope.

**Revendications pour l'Etat contractant: AT**

1. Produit antiparasitaire contenant comme principe actif un ester d'acide 1 - phényl - 3,3 - dichloro - 2 - porpényl - (di) (thio) - phosphorique de formule I

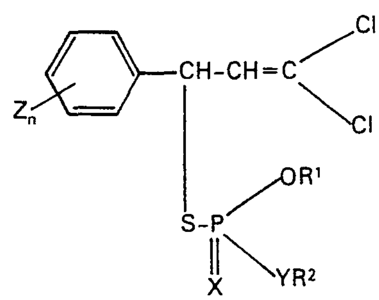

I

dans laquelle

$R^1$ représente méthyle ou éthyle
$R^2$ alkyle, ramifié ou non, ayant jusqu'à 5 atomes de carbone
X oxygène ou soufre
Y ogygène, soufre ou $-N(CH_3)-$
Z halogène ou alkyle ou alcoxy, ramifié ou non, ayant jusqu'à 4 atomes C et
n 0, 1 ou 2.

2. Produit antiparasitaire, contenant un additif inerte et au moins un ester d'acide 1 - phényl - 3,3 -

dichloro-2-propényl-(di)(thio)-phosphorique de formule I selon la revendication 1.

3. Procédé de préparation d'ester d'acide 1-phényl-3,3-dichloro-2-propényl-(di)(thio)-phosphorique de formule I selon la revendication 1, caractérisé par le fait que l'on fait réagir, à des températures comprises entre 0 et 100 °C, en présence d'un solvant ou diluant inerte, du 1,1,3-trichloro-3-phényl-1-propène de formule II

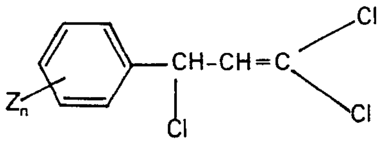

II

dans laquelle Z et n ont la signification indiquée dans la revendication 1, avec des sels de formule III

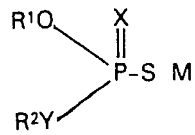

III

dans laquelle $R^1$, $R^2$, X et Y ont la signification indiquée à la revendication 1 et $M^{\oplus}$ est un ion ammonium ou métal alcalin éventuellement substitué.